# EUROPÄISCHE PATENTANMELDUNG

(11) **EP 1 104 664 A1**
(43) Veröffentlichungstag der Anmeldung: **06.06.2001**
(21) Anmeldenummer: 99710016.9
(22) Anmeldetag: 25.11.1999
(51) Int. Cl.: A61C 13/20, B22C 1/02, B22C 9/22, B28B 1/26

(54) **Vorrichtung zur Herstellung von Gusswerkstücken**

(71) Anmelder: SHERA-Werkstofftechnologie GmbH & Co.KG, 49448 Lemförde (DE)
(72) Erfinder: Nowack, Norbert Prof. Dr.-Ing., 47877 Willich (DE); Haider, Otmar, 49459 Lembruch (DE); Grill, Günther, 49448 Lemförde (DE)
(74) Vertreter: Stenger, Watzke & Ring Patentanwälte

(57) **Zusammenfassung**

Die vorliegende Erfindung betrifft eine Vorrichtung zur Herstellung von Gusswerkstücken, insbesondere filigraner Präzisionsgussteile im medizinischen Bereich, bestehend aus einem Muffelformer (1) zur Aufnahme einer beim Abbinden expandierenden Einbettmasse (5), die zur Bildung einer Gießform ein dem zu gießenden Werkstück entsprechendes Modell umschließt. Die Erfindung ist dadurch gekennzeichnet, dass der Muffelformer (1) in bewegbare Segmente (4) unterteilt ist, die der beim Abbinden auftretenden Expansion der Einbettmasse (5) weichen.

## Beschreibung

Die Erfindung betrifft eine Vorrichtung zur Herstellung von Gusswerkstücken, insbesondere filigraner Präzisionsgussteile im medizinischen Bereich, die aus einem Muffelformer zur Aufnahme einer beim Abbinden expandierenden Einbettmasse, welche zur Bildung einer Gießform ein dem zu gießenden Werkstück entsprechendes Modell umschließt, besteht.

Im medizinischen Bereich, insbesondere in der Dentaltechnik, werden individuell anzufertigende Prothesen üblicherweise aus Metalllegierungen, etwa auf Basis von Titan (Ti), Palladium-Silber (PdAg), Nickel-Chrom (NiCr), Cobalt-Chrom (CoCr), Gold (Au), oder aus glaskeramischen Werkstoffen, beispielsweise auf Silicat- oder Phosphatbasis, gegossen. Die hierzu verwendeten Gießformen bestehen aus einer keramischen Einbettmasse, die mit Hilfe eines etwa dem zu rekonstruierenden Körperteil entsprechenden Modells aus Wachs oder einem vergleichbaren organischen Stoff geschaffen wird.

Dies geschieht dadurch, dass ein aus einer Keramikmischung und einem Bindemittel bestehender Brei mit einer Anmischflüssigkeit angerührt und auf das beispielsweise aus Wachs bestehende Modell aufgetragen wird. Das Wachsmodell befindet sich dabei in einem Muffelformer, welcher die anfänglich pastöse Einbettmasse seitlich begrenzt. Aufgrund einer durch die Anmischflüssigkeit hervorgerufenen chemischen Reaktion bindet die Einbettmasse nach kurzer Zeit ab und es entsteht eine feste Gießform, die sogenannte "grüne" Gießform. Die Einbettmasse wird anschließend auf eine Temperatur erwärmt, bei der das Wachs des Wachsmodells rückstandslos herausfließt bzw. verbrennt, so dass in den sich auf diese Weise in der Einbettmasse bildenden Hohlraum später der Gießwerkstoff vergossen werden kann. Um die erforderlichen Gießparameter, beispielsweise die Kantenstabilität der Gießform, zu erreichen, wird die Gießform vor dem Einbringen des Gießwerkstoffes auf Temperaturen von bis zu 1000 °C vorgewärmt.

Während des Abkühlens ist der Gießvorgang durch eine Volumenkontraktion des Gießwerkstoffes gekennzeichnet. Bereits im flüssigen Zustand tritt eine Schrumpfung ein, die beim Erstarren in eine Schwindung übergeht. Um eine möglichst geringe Abweichung des Gussteils von dem Wachsmodell, das dem zu rekonstruierenden Körperteil exakt entspricht, sicherzustellen, ist es bekannt, die Volumenkontraktion des Gießwerkstoffes durch eine Expansion der die Gießform bildenden Einbettmasse zu kompensieren. Die Gesamtexpansion der Einbettmasse setzt sich dabei aus einer Abbindeexpansion während des Abbindens des Breis und einer thermischen Expansion beim Erwärmen der Gießform zusammen. Eine hohe thermische Expansion lässt sich dann erreichen, wenn quarzhaltige Einbettmassen verwendet werden. Dies ist auf das thermische Umwandlungsverhalten von Siliciumdioxid-Modifikationen zurückzuführen. So findet durch eine α/β-Umwandlung eine sprunghafte Ausdehnung von Cristobalit bei etwa 270 °C und von Quarz bei etwa 570 °C statt.

Quarzhaltige Einbettmassen zeichnen sich zwar durch hohe Expansionswerte von bis zu 2 % aus, die eine Abbindeexpansion oftmals entbehrlich machen, weisen aber neben einer gesundheitsschädlichen Bildung von Feinstäuben mit einer Korngröße von < 10 µm den Nachteil eines gleichfalls ungleichmäßigen Abkühlungsverhaltens auf. Dies hat zur Folge, dass in dem beim Abkühlen mit der Einbettmasse in Kontakt stehenden Gussteil Spannungen auftreten, die zu einer unzulässigen plastischen Verformung oder Rissbildung führen können. Nachteilig bei quarzhaltigen Einbettmassen ist ferner eine verhältnismäßig niedrige Erweichungstemperatur, die bei hohen Gießtemperaturen, wie sie beim Vergießen von beispielsweise Titanlegierungen erforderlich sind, Verschlackungsreaktionen hervorrufen, die Passungenauigkeiten mit sich bringen. Bei Gießwerkstoffen auf Basis von Titan (Ti) oder Zirkonium (Zr), die oberhalb einer Temperatur von etwa 900 °C eine hohe Affinität zu Sauerstoff, Kohlenstoff, Stickstoff und Wasserstoff aufweisen, ergibt sich darüber hinaus eine durch Oxidation gebildete Versprödung der Außenhaut des Gusswerkstückes. Diese unter der Bezeichnung Alpha-case-Form bekannte Randzonenoxidation geht zwar mit einer erhöhten Materialhärte einher, die für gewisse Anwendungszwecke erwünscht ist, für Präzisionsgussteile aber aufgrund der damit verbundenen Passungenauigkeiten infolge von beispielsweise Lunker oder Gaseinschlüssen zu vermeiden ist.

Im Vergleich hierzu weisen die weniger gesundheitsgefährdenden und weniger zu einer Alpha-case-Form-Bildung neigenden quarzfreien keramischen Einbettmassen ein nahezu konstantes thermisches Ausdehnungsverhalten auf. Aufgrund eines bis zu etwa 900 °C, dass heißt bis zur Vorwärmtemperatur der Gießform, kleinen Ausdehnungskoeffizienten, lässt sich mit quarzfreien Einbettmassen allerdings nur eine geringe thermische Expansion von maximal 0,5 % erreichen. Zur Kompensation der beim Abkühlen auftretenden Volumenkontraktion des Gießwerkstoffes sind daher hohe Werte für die Abbindeexpansion erforderlich.

Zu diesem Zweck ist es aus der EP 0 916 430 A1 bekannt, eine organische Carbonsäure, beispielsweise Citronensäure, einer quarzfreien, aus einer Magnesiumoxid (MgO) enthaltenden Oxidkeramikmischung, einem auf Magnesiumoxid (MgO) und Monoammoniumphosphat (NH₄H₂PO₄) basierenden Bindemittel und als Anmischflüssigkeit dienenden Kieselsol bestehenden Einbettmasse zuzuführen. Durch den Gehalt an Magnesiumoxid (MgO) in der Oxidkeramikmischung und der Art und dem Anteil der Carbonsäure wird dabei die für den zu verarbeitenden Gießwerkstoff erforderliche Abbindeexpansion eingestellt. Eine verhältnismäßig hohe Abbindeexpansion findet auch bei dem mit der europäischen Patentanmeldung 99 107 009.5 vorgeschlagenen Verfahren zur Herstellung von Gusswerkstücken Anwendung, bei dem die beim Abbinden auftretende Expansion der Einbettmasse durch Variieren des Gehalts an kolloidalem, amorphem Siliciumdioxid (SiO₂) in dem Kieselsol auf einfache Art und Weise gesteuert wird.

Mit Einbettmassen, die eine hohe Abbindeexpansion und eine geringe thermische Expansion aufweisen, lassen sich zwar generell hohe Passgenauigkeiten mit Abweichungen von weniger als 0,1 % - wie sie zum Beispiel in der Dentaltechnik bei der Herstellung von Brückenkonstruktionen erforderlich sind - erreichen, nachteilig ist aber, dass sich eine in wirtschaftlicher Hinsicht unbefriedigende hohe Ausschussquote der gegossenen Werkstücke ergibt. Dies ist darauf zurückzuführen, dass der die Einbettmasse aufnehmende Muffelformer während des Abbindens einer ungehinderten Expansion der Einbettmasse entgegensteht. Druckspannungen, die sich demzufolge in der sich während des Abbindens in einem plastischen Zustand befindenden Einbettmasse bilden und mit zunehmender Expansion der Einbettmasse während der Abbindezeit anwachsen, rufen eine Deformation des verhältnismäßig weichen Modells aus beispielsweise Wachs hervor oder lassen Freiräume zwischen der Einbettmasse und dem Modell entstehen, so dass ein verzerrter Abdruck des zu gießenden Werkstücks in der Einbettmasse erzeugt wird. Aufgrund der Druckspannungen werden darüber hinaus die isotropen Eigenschaften der Einbettmasse, wie zum Beispiel eine gleichmäßige Porosität oder lineare thermische Ausdehnung, beeinträchtigt. Insgesamt werden daher Gusswerkstücke geschaffen, die den vor allem im medizinischen Bereich geforderten hohen Genauigkeitsgrad nicht erfüllen und deshalb zu Ausschuss führen.

Um die beim Abbinden der Einbettmasse auftretenden Druckspannungen zu kompensieren, ist zwar bereits vorgeschlagen worden, einen Muffelformer aus einem weichen und damit nachgiebigen Material zu verwenden, die dabei unweigerlich auftretenden Federkräfte führen aber weiterhin dazu, dass das dem zu gießenden Werkstück entsprechende Modell beschädigt und ein insbesondere bei Hochpräzisionsgussteilen zu Ausschuss führender verzerrter Abdruck in der Einbettmasse geschaffen wird.

Der Erfindung liegt die **Aufgabe** zugrunde, eine Vorrichtung zur Herstellung von Gusswerkstücken dahingehend weiterzubilden, dass sich bei einer vergleichsweise hohen Abbindeexpansion eine hohe Passgenauigkeit der gegossenen Werkstücke und damit eine geringe Ausschussquote erzielen lässt.

Diese Aufgabe ist bei einer Vorrichtung zur Herstellung von Gusswerkstücken mit den eingangs genannten Merkmalen erfindungsgemäß dadurch **gelöst**, dass der Muffelformer in bewegbare Segmente unterteilt ist, die der beim Abbinden auftretenden Expansion der Einbettmasse weichen.

Eine solchermaßen ausgebildete Vorrichtung ermöglicht eine hohe Passgenauigkeit der gegossenen Werkstücke und infolgedessen eine geringe Ausschussquote. Ursächlich hierfür ist eine ungehinderte Expansion der Einbettmasse während des Abbindens, wodurch das Entstehen von schädlichen Druckspannungen in der Einbettmasse verhindert wird. Die ungehinderte Expansion der Einbettmasse wird dadurch ermöglicht, dass der Muffelformer in bewegbare Segmente unterteilt ist, die demzufolge der beim Abbinden auftretenden Expansion der Einbettmasse ausweichen können.

Um eine allseitige Ausdehnung der Einbettmasse sicherzustellen, ist der Muffelformer in einer bevorzugten Ausgestaltung der Erfindung aus mindestens drei Segmenten zusammengesetzt. Im Hinblick auf eine einfache Handhabung hat sich allerdings eine Höchstzahl von acht Segmenten als zweckmäßig erwiesen. Vorteilhafterweise sind die Segmente dabei durch Schlitze in der Wandung des Muffelformers gebildet, so dass eine einfache Fertigung der Segmente gewährleistet ist. Zweckmäßigerweise sind die Schlitze im wesentlichen gerade verlaufend ausgebildet, um Kantenflächen der Segmente zu erreichen, die ein gegenseitiges Verhaken der Segmente ausschließen, so dass ein freies Bewegen der Segmente beim Expandieren der Einbettmasse sichergestellt ist.

Gemäß einer vorteilhaften Weiterbildung der Erfindung enden die Schlitze oberhalb des unteren Randes des Muffelformers, und zwar vorzugsweise ca. 1 cm davor. Dabei ist es vorteilhaft, das obere Ende des Muffelformers durch einen Ring oder Rahmen zu stabilisieren. Da die Segmente bei einer solchen Ausgestaltung im unteren Bereich des Muffelformers miteinander verbunden bleiben, ergibt sich eine einfache Handhabung des Muffelformers. Wenngleich die Segmente hierdurch nur im geschlitzten Teil des Muffelformers bewegbar, d. h. durch die Expansion der Einbettmasse auseinander biegbar, sind, ist eine die Passgenauigkeit des zu gießenden Gussteils beeinträchtigende Schädigung des beispielsweise aus Wachs bestehenden Positivmodells ausgeschlossen. Denn im unteren Bereich des Muffelformers befinden sich gewöhnlich nur solche Teile des Modells, die den späteren Gusstrichter bzw. Gussverteilungskanäle bilden und mithin einer geringeren Formgenauigkeit unterliegen. Das eigentlich zu gießende Werkstück bleibt folglich unbeeinflusst.

Eine besonders vorteilhafte Ausgestaltung ist ferner dann gegeben, wenn alternativ die Schlitze durchgehend ausgebildet sind. In diesem Fall werden die Segmente durch die Expansion der Einbettmasse auseinander geschoben. Um beim Einfüllen der Einbettmasse in den Muffelformer den Zusammenhalt der Segmente zu gewährleisten, ist gemäß einem weiteren Merkmal der Erfindung bis zum Beginn der Abbindereaktion eine der Form des Muffelformers entsprechende ring-oder rahmenförmige Halterung vorgesehen. Diese wird bei Eintritt der Abbindeexpansion entfernt, so dass die dann beweglichen Segmente der Expansion der Einbettmasse weichen können. Im Hinblick auf eine einfache Handhabung ist es ferner zweckmäßig, für den Zusammenhalt der Segmente bis zum Beginn der Abbindeexpansion anstelle der Halterung eine federnde Klammer vorzusehen. Diese hält dann die Segmente in Art eines Clips zusammen und lässt sich leicht anbringen und entfernen.

In alternativer Weiterbildung der Erfindung sind die Segmente vorteilhafterweise durch einen wärmeempfindlichen Klebstoff, vorzugsweise Paraffinwachs mit einem niedrigen Schmelzpunkt von 30 °C bis 35 °C, miteinander verbunden. Bei Raumtemperatur ist dann ein fester Zusammenhalt der Segmente sichergestellt, der das Einfüllen der anfänglich pastösen Einbettmasse in den Muffelformer ermöglicht. Da sich die Einbettmasse während des Abbindevorgangs auf Temperaturen von bis zu 80 °C erwärmt, verliert der Klebstoff während des Abbindens der Einbettmasse seine Bindungswirkung. Die somit lose gewordenen Segmente können sich nun frei bewegen und der Expansion der Einbettmasse weichen. Im Vergleich zu den zuvor geschilderten Ausgestaltungen bedarf diese selbsttätige Alternative keines zusätzlichen Entfernens der Halterung bzw. der Klammer und ist daher in fertigungstechnischer Hinsicht besonders günstig.

Von besonderem Vorteil ist ein Innendurchmesser des Muffelformers zwischen 2 cm und 10 cm, um Präzisionsgussteile, wie sie insbesondere im medizinischen Prothetikbereich erforderlich sind, herzustellen. Zu diesem Zweck ist es außerdem von Vorteil, wenn das Volumen des Muffelformers zwischen 30 ml und 500 ml und die Wandstärke des Muffelformers zwischen 5 mm und 30 mm beträgt. Schließlich wird vorgeschlagen, dass der Muffelformer aus Gummi, vorzugsweise Moosgummi, Hochdruckpolyethylen (PE weich), Polypropylen (PP), Polyurethan (PUR), Kautschuk oder Silikon ist, so dass sich neben einer zusätzlichen Elastizität des Muffelformers auch eine verhältnismäßig kostengünstige Herstellung ergibt.

Einzelheiten und weitere Vorteile des Gegenstandes der vorliegenden Erfindung ergeben sich aus der nachfolgenden Beschreibung bevorzugter Ausführungsbeispiele. In den zugehörigen Zeichnungen zeigen im Einzelnen:
- Fig. 1a: eine Draufsicht auf einen Muffelformer in einer ersten Ausführungsform;
- Fig. 1b: eine perspektivische Ansicht des in Fig. 1a gezeigten Muffelformers;
- Fig. 2a: eine Draufsicht auf einen Muffelformer in einer zweiten Ausführungsform;
- Fig. 2b: eine perspektivische Ansicht des in Fig. 2a gezeigten Muffelformers;
- Fig. 3a: eine Draufsicht auf einen Muffelformer in einer dritten Ausführungsform;
- Fig. 3b: eine perspektivische Ansicht des in Fig. 3a gezeigten Muffelformers;
- Fig. 4a: eine Draufsicht auf einen Muffelformer in einer vierten Ausführungsform und
- Fig. 4b: eine perspektivische Ansicht des in Fig. 4a gezeigten Muffelformers.

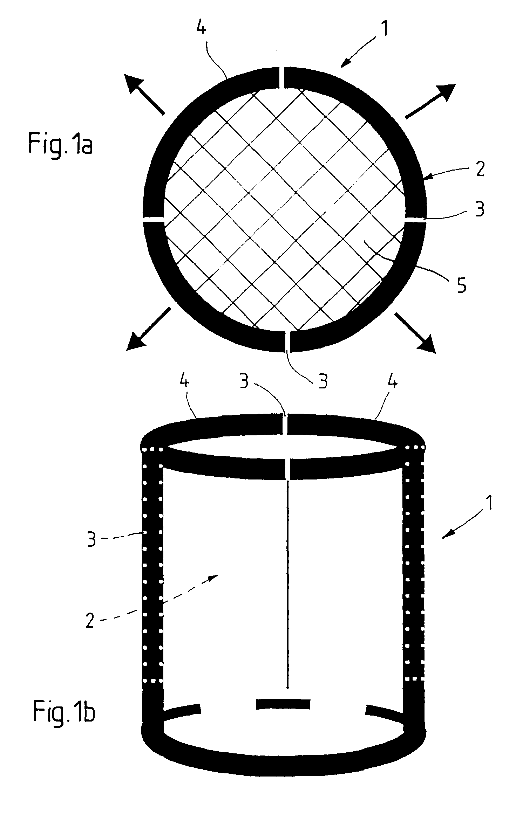

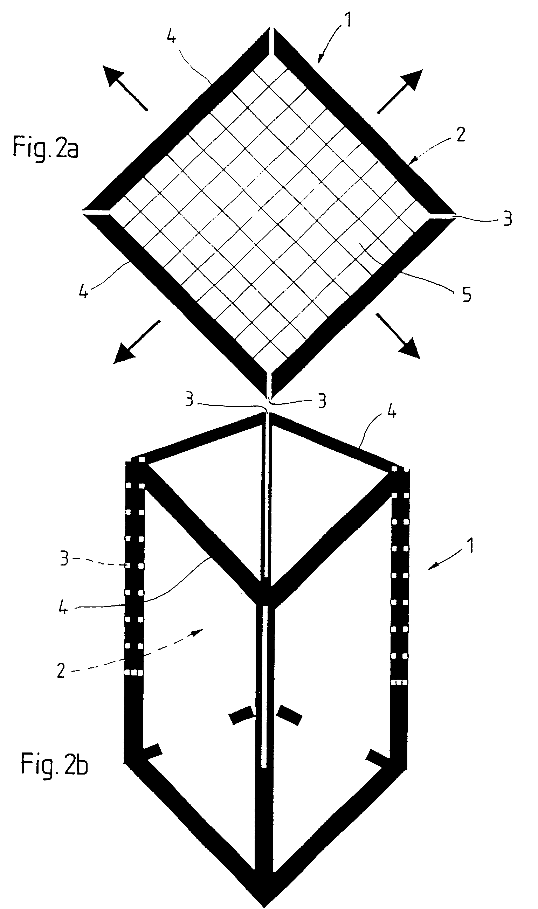

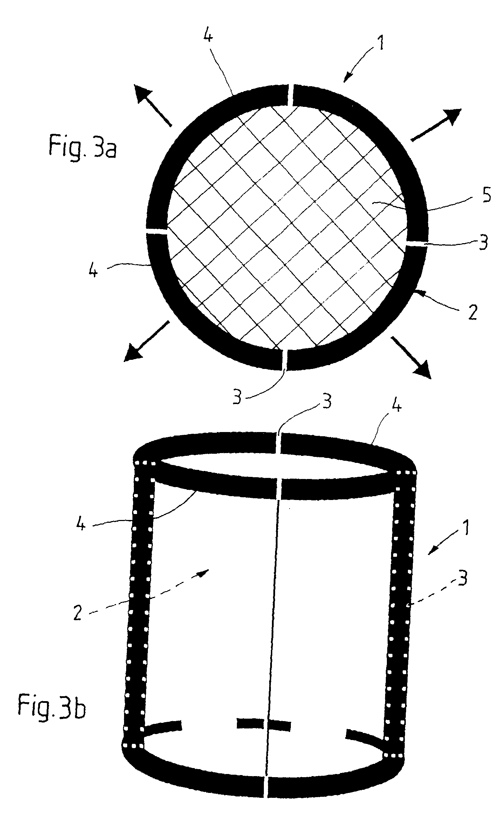

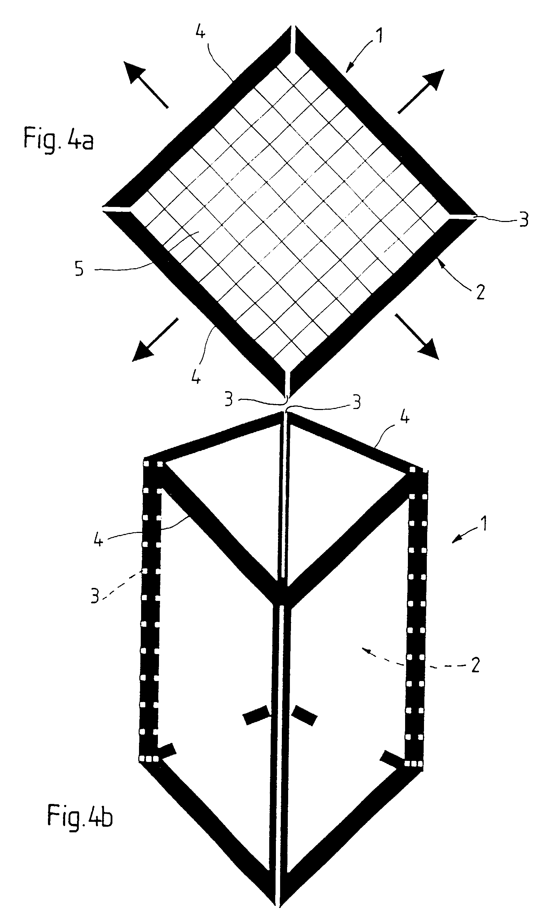

In den Fig. 1a, 1b und 3a, 3b ist ein Muffelformer 1 dargestellt, die einen zylindrischen Querschnitt aufweist. Im Vergleich hierzu ist der in den Fig. 2a, 2b und 4a, 4b gezeigte Muffelformer 1 im Querschnitt quadratisch ausgebildet. Die je nach Anwendungsfall eine Stärke von 5 mm bis 30 mm aufweisende Wandung 2 des Muffelformers 1 ist in allen dargestellten Ausführungsformen durch Schlitze 3 in jeweils vier Segmente 4 unterteilt. Die Schlitze 3 erstrecken sich bei den in den Fig. 1a, 1b und 2a, 2b zu erkennenden Muffelformern 1 von deren oberem Rand bis ein Stück weit oberhalb des unteren Randes. Die durch die senkrecht verlaufenden Schlitze 3 gebildeten Segmente 4 sind dadurch im unteren Bereich des Muffelformers 1 fest miteinander verbunden. Die Schlitze 3 der in den Fig. 3a, 3b und 4a, 4b dargestellten Muffelformer 1 hingegen sind durchgehend ausgebildet, so dass die Segmente 4 lose nebeneinander stehen. Der Zusammenhalt der Segmente 4 kann dabei dadurch erreicht werden, dass eine der jeweiligen äußeren Form des Muffelformers 1 entsprechende ring- oder rahmenförmige Halterung um die Segmente 4 herum gelegt wird. Alternativ kann eine in Art eines Clips wirkende Klammer vorgesehen oder die Segmente 4 durch einen wärmeempfindlichen Klebstoff miteinander verbunden werden.

Wie insbesondere in den Fig. 1a, 2a, 3a und 4a zu erkennen ist, lässt sich in den je nach Anwendungsfall einen Innendurchmesser von 2 cm bis 10 cm und ein Volumen von 30 ml bis 500 ml aufweisende und beispielsweise aus Polypropylen (PP) gefertigten Muffelformer 1 eine Einbettmasse 5 einfüllen, die ein in dem Muffelformer 1 angeordnetes Wachsmodell eines zu gießenden Werkstücks umschließt. Die Einbettmasse 5 setzt sich dabei zum Beispiel aus einer Oxidkeramikmischung bestehend aus 10 Gew.-% Korund (α-Al₂O₃) mit einem mittleren Korndurchmesser von 250 µm, 7 Gew.-% Magnesiumoxid (MgO) mit verschiedenen Kornfraktionen von 10 µm bis 70 um, einem Bindemittel bestehend aus 5 Gew.-% Monoammoniumphosphat (NH₄H₂PO₄) von wasserfreier Qualität, einer organischen Säure aus 0,6 Gew.-% Citronensäure, 77,4 Gew.-% Zirkoniumsilikat (ZrSiO₄) mit einem mittleren Korndurchmesser von 30 µm und einer Anmischflüssigkeit aus 37%-iges Kieselsol (17 ml für 100 g Einbettmasse 5) zusammen, wobei sich die Gehalts-Angaben auf die Gesamtmasse der Einbettmasse 5 beziehen.

Bei einer solchermaßen zusammengesetzten Einbettmasse 5 tritt nach ca. 10 min eine chemische Abbindereaktion ein, die unter Wärmeentwicklung nach ca. 1 h zu einer festen Gießform führt, in der sich ein negativer Abdruck des von der Einbettmasse 5 eingeschlossen und dem zu gießenden Werkstück exakt entsprechenden Modells ausgebildet hat. Während des Abbindens findet eine Expansion der Einbettmasse 5 statt. Die in die Segmente 4 unterteilte Wandung 2 des sich zusammen mit dem Wachsmodell auf einer glatten oder strukturierten Unterlage befindenden Muffelformers 1 gibt dabei der Expansion der Einbettmasse 5 nach, indem die Segmente 4 nach außen hin ausweichen. Voraussetzung hierfür ist, dass die Segmente 4 frei bewegbar sind.

Dies ist im Fall der Ausführungsformen gemäß den Fig. 1a, 1b und 2a, 2b nur in dem oberen, geschlitzten Teil des Muffelformers 1 gegeben, da sich die Segmente 4 dort nach außen hin biegen können. Die Passgenauigkeit des zu gießenden Werkstücks bleibt hiervon jedoch unberührt, wie zuvor erörtert wurde. Im Fall der Ausführungsformen gemäß den Fig. 3a, 3b und 4a, 4b, bei denen die Schlitze 3 durchgehend in der Wandung 2 ausgebildet sind, können sich die Segmente 4 hingegen frei verschieben, um der Expansion der Einbettmasse 5 auszuweichen. Dies setzt allerdings voraus, dass der mittels einer Halterung oder Klammer bewirkte Zusammenhalt der Segmente 4 zu Beginn der Abbindeexpansion, d. h. vorliegend nach etwas mehr als 10 min, entfernt worden ist. Werden die Segmente 4 dagegen durch ein Klebewachs, etwa Paraffinwachs mit einem Schmelzpunkt zwischen 30 °C und 35 °c, miteinander verbunden, so wird aufgrund der bei der Expansion auftretenden Wärmeentwicklung, die Temperaturen bis zu 80 °C erreicht, die Bindungswirkung des Klebewachs während des Abbindevorgangs selbsttätig aufgehoben, wodurch sich die Segmente 4 dann frei verschieben können.

Nachdem die Einbettmasse 5 nach ca. 1 h vollständig abgebunden ist, wird das von ihr umschlossene Wachsmodell durch Verbrennen vollständig entfernt. Der hierdurch entstehende Hohlraum in der Einbettmasse 5 entspricht exakt dem zu gießenden Werkstück und bildet die hiefür erforderliche Gießform, in die anschließend der jeweilige Gießwerkstoff vergossen wird.

Der zuvor beschriebene, in Segmente 4 aufgeteilte Muffelformer 1 eignet sich in besonderem Maße zum Erzeugen einer Gießform für Präzisionsgussteile mit einer hohen Passgenauigkeit, wie etwa Teleskop- und Geschiebeteile oder mehrgliedrige Brücken im Dentalbereich, bei denen in der Regel Abweichungen von weniger als ± 0,1 % von dem zu rekonstruierenden Körperteil gefordert werden. Eine einfache Handhabung ist dabei durch das Vorsehen einer Halterung bzw. Klammer für den Zusammenhalt der Segmente 4 bis zum Beginn der Abbindeexpansion der in den Muffelformer 1 eingefüllten Einbettmasse 5 oder durch das Verbinden der Segmente 4 mit einem wärmeempfindlichen Klebstoff gewährleistet. Nicht zuletzt wird mit dem Muffelformer 1 der Erhaltung der isotropen Eigenschaften der Einbettmasse 5, wie etwa ein lineares thermisches Ausdehnungsverhalten, und einem durch das von der Einbettmasse 5 umgebene intakte Modell bedingten akkuraten Abdruck des zu gießenden Werkstücks in der Einbettmasse 5 Rechnung getragen, wodurch sich insgesamt eine geringe Ausschussquote der gegossenen Werkstükke ergibt.

### Bezugszeichenliste

- 1: Muffelformer
- 2: Wandung
- 3: Schlitz
- 4: Segment
- 5: Einbettmasse

## Patentansprüche

1. Vorrichtung zur Herstellung von Gusswerkstücken, insbesondere filigraner Präzisionsgussteile im medizinischen Bereich, bestehend aus einem Muffelformer (1) zur Aufnahme einer beim Abbinden expandierenden Einbettmasse (5), die zur Bildung einer Gießform ein dem zu gießenden Werkstück entsprechendes Modell umschließt,
**dadurch gekennzeichnet**,
dass der Muffelformer (1) in bewegbare Segmente (4) unterteilt ist, die der beim Abbinden auftretenden Expansion der Einbettmasse (5) weichen.

2. Vorrichtung nach Anspruch 1, dadurch gekennzeichnet, dass der Muffelformer (1) aus mindestens drei Segmenten (4) zusammengesetzt ist.

3. Vorrichtung nach Anspruch 1 oder 2, dadurch gekennzeichnet, dass die Segmente (4) durch Schlitze (3) in der Wandung (2) des Muffelformers (1) gebildet sind.

4. Vorrichtung nach Anspruch 3, dadurch gekennzeichnet, dass die Schlitze (3) im wesentlichen gerade verlaufend ausgebildet sind.

5. Vorrichtung nach Anspruch 3 oder 4, dadurch gekennzeichnet, dass die Schlitze (3) oberhalb des unteren Randes des Muffelformers (1), vorzugsweise ca. 1 cm davor, enden.

6. Vorrichtung nach Anspruch 3 oder 4, dadurch gekennzeichnet, dass die Schlitze (3) durchgehend ausgebildet sind.

7. Vorrichtung nach Anspruch 5 oder 6, dadurch gekennzeichnet, dass für den Zusammenhalt der Segmente (4) bis zum Beginn der Abbindeexpansion eine der Form des Muffelformers (1) entsprechende ring- oder rahmenförmige Halterung vorgesehen ist.

8. Vorrichtung nach Anspruch 5 oder 6, dadurch gekennzeichnet, dass für den Zusammenhalt der Segmente (4) bis zum Beginn der Abbindeexpansion eine federnde Klammer vorgesehen ist.

9. Vorrichtung nach Anspruch 5 oder 6, dadurch gekennzeichnet, dass die Segmente (4) durch einen wärmeempfindlichen Klebstoff, vorzugsweise Paraffinwachs mit einem niedrigen Schmelzpunkt von 30 °C bis 35 °C, miteinander verbunden sind.

10. Vorrichtung nach einem der Ansprüche 1 bis 9, gekennzeichnet durch einen Innendurchmesser des Muffelformers (1) zwischen 2 cm und 10 cm.

11. Vorrichtung nach einem der Ansprüche 1 bis 10, gekennzeichnet durch ein Volumen des Muffelformers (1) zwischen 30 ml und 500 ml.

12. Vorrichtung nach einem der Ansprüche 1 bis 11, gekennzeichnet durch eine Wandstärke des Muffelformers (1) zwischen 5 mm und 30 mm.

13. Vorrichtung nach einem der vorhergehenden Ansprüche, dadurch gekennzeichnet, dass der Muffelformer (1) aus Gummi, vorzugsweise Moosgummi, Hochdruckpolyethylen (PE weich), Polypropylen (PP), Polyurethan (PUR), Kautschuk oder Silikon ist.
